# EUROPEAN PATENT APPLICATION

(11) **EP 3 260 421 A1**
(43) Date of publication of application: **27.12.2017**
(21) Application number: 16843283.9
(22) Date of filing: 20.05.2016
(51) Int. Cl.: C02F 1/00, C02F 1/46, C02F 1/68, C04B 35/16

(54) **COMPOSITE MINERALIZED CERAMIC MATERIAL CAPABLE OF PRODUCING ACTIVE HYDROGEN HEALTHCARE WATER**

(30) Priority: 27.04.2016 CN 201602663003
(71) Applicant: KUN SHAN SUPER LION BIOLOGICAL TECHNOLOGY CO., LTD, Jiangsu 215334 (CN)
(72) Inventor: FAN, Huichang, Kunshan Jiangsu 215334 (CN); TAN, Jiming, Kunshan Jiangsu 215334 (CN); ZHANG, Zhanzhi, Kunshan Jiangsu 215334 (CN); HAN, Zhaohai, Kunshan Jiangsu 215334 (CN); SUN, Xueli, Kunshan Jiangsu 215334 (CN)
(74) Representative: Global IP Europe Patentanwaltskanzlei
(86) International application number: PCT/CN2016/082873
(87) International publication number: WO 2017/185435

(57) **Abstract**

The present invention discloses a mineralized ceramic composite material capable of producing healthy water with active hydrogens, formed by mixing a mineralized ceramic A, a mineralized ceramic B with a mineralized ceramic C; wherein the mineralized ceramic A is formed by sintering 20 to 40% by weight of dravite and 60 to 80% by weight of montmorillonite at the temperature of 500 to 850°C; the mineralized ceramic B is formed by sintering 40 to 50% by weight of muyu stone, 10 to 20% by weight of medical stone and 30 to 50% by weight of montmorillonite at the temperature of 500 to 850°C; and the mineralized ceramic C is made from 100% by weight of magnesium particles with electrolytic process. The present invention has the following advantages: when the mineralized ceramic composite material of the present invention is soaked in potable water after bagged, a variety of active hydrogens and hydrogen gas can be released and stably dissolved in water, which can effectively keep people healthy in many ways and restrain the relevant etiology of the human body. The active hydrogens have great contribution to healthy living of the human being.

## Description

### FIELD OF THE INVENTION

The present invention relates to a mineralized ceramic material, and particularly to a mineralized ceramic composite material capable of producing healthy water with active hydrogens.

### BACKGROUND OF THE INVENTION

### I. Introduction of water containing hydrogen (hydrogen water)

Hydrogen-rich water, as the name implies, is water enriched with hydrogen, and in English it is hydrogen water, while in Japanese it is " 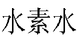 ". For a long time, biologists consider that hydrogen is an inert gas in physiology, but, in practice, hydrogen itself is a natural antioxidant. Therefore, the water enriched with hydrogen has strong reducibility and is able to neutralize reactive oxygen (or oxyradical) in blood and cells of the human body. That is to say, hydrogen-rich water is soft water with the features of containing abundant hydrogen gas, being alkalescence, and composing by small molecular groups.

### II. Theoretical basis of water containing hydrogen (hydrogen water) in enhancing human heath

Chronic diseases are caused by oxyradicals which mainly are reactive oxygen species (ROS). Therefore, water can resist diseases if the water is able to resist oxidation. The essence of ionized water and alkaline water's functionality is also containing hydrogen therein; in other words, the element that really and effectively facilitate detoxification is hydrogen. There is no hydrogen in plain water. Hydrogen is decomposed into two hydrogen atoms after entering into human bodies and achieves detoxification by reducing oxyradicals.

### III. Technical difficulties in producing water containing hydrogen

Gas is featured with comparatively low solubility and slow dissolution velocity in water, which are the critical factors leading to technical difficulties in producing and manufacturing hydrogen-rich water. The even challenging factor is that hydrogen gas is easily released; in other words, the ordinary packaging techniques and methods as a result cannot prevent hydrogen gas from releasing, thereby bring great difficulties in hydrogen-rich water packaging. Until now, scholars and businesses are still dedicating themselves in researching and developing new types and modes of such products, which indicates that great technical difficulties do exist in producing hydrogen-rich water and without doubts, which also indicates capacity for new products to be developed.

### IV. Overview of oxyradical

It is known that metabolism of living matters requires moderate oxidation-reduction reaction, but life will be threatened for excessive overoxidation reaction.

Reactive oxygen, such as hydroxyl free radical, superoxide anion, hydrogen peroxide and singlet oxygen, is highly oxidative; the essential of being oxidative indicates being able to steal electrons from other substances and by referring these reactive oxygens as highly oxidative indicates strong capabilities that these reactive oxygens have to steal electrons. Oxidativity is the fundamental cause for biological molecule being damaged by reactive oxygens; to sustain its stability, an organism has a sound set of anti-oxidation mechanism. However, if the set of anti-oxidation mechanism of an organism is not capable to balance oxidation as a result of aging and diseases, oxidation damage and pathological process appear. The oxidation damage problems exist for many diseases, such as cancer, inflammation, hypertension, arteriosclerosis, diabetes, neurodegenerative disease and the like.

For the problems of oxidation damage and unbalanced stability, scholars have initiated numerous researches attempting to correct and cure diseases related with oxidation damage by utilizing the concept of anti-oxidation.

### V. Argument about hydrogen technology

With the advantages of small molecular weight, strong capability of diffusion, non-toxic and selective neutralization to the toxic free radicals, hydrogen is considered an excellent biological antioxidant which makes it standing out from biomedical research field in recent years. In 2007, Professor Ohta Shigeto ( 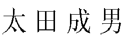 ) has first proved that hydrogen's selective anti-oxidation effect by using a typical cerebral ischemia-reperfusion oxidation damage model, thereby opening a door for biomedicine research in hydrogen gas. Following that, numerous cell and animal tests and some clinical researches have successively proved that hydrogen gas has positive effect in treating various organs ischemia-reperfusion damages, inflammatory response, cancer, diabetes, Parkinson's disease, Alzheimer's disease, and angiocardiopathy.

Hydrogen gas is composed of molecules that are weak acid (pKa=35) and is difficult to dissolve in water. The water dissolved with hydrogen presents obvious negative redox potential (ORP), yet the water after releasing hydrogen and the plain water present positive redox potential.

### VI. Technical breakthrough in producing water containing hydrogen

Conventional method for producing hydrogen water is the method of electrolyzing water. However, since certain byproducts are easily formed in the process of electrolysis, the method of electrolyzing water is gradually replaced by the technique of directly dissolving hydrogen.

### VII. Electrolysis techniques in producing hydrogen water

Hydrogen ion gets electrons from cathode to turn into hydrogen atom, and two hydrogen atoms combine to form one hydrogen molecule; since hydrogen ion is consumed, the concentration of hydroxyl ion is relatively increased, the water around cathode gradually becomes alkalinity. It was found that water reduced by electrolysis can defer aging and neutralize the toxic free radicals.

### VIII. Techniques in producing hydrogen water by reacting magnesium metal with water

Many hydrogen rods in current marketplace are based on this principle.

The hydrogen concentration in hydrogen water produced by reacting magnesium metal with water can reach 0.55 to 0.56mM (2.5 ppm).

### IX. Techniques by combining weak acid (e.g. citric acid) and magnesium metal

By combining with hydroxypropyl cellulose (HPC) as an auxiliary material, Mg-citric acid-HPC (MgCC), a component that is used to produce hydrogen water, is produced.

Since the speed of producing hydrogen by reacting magnesium metal with water is primarily affected by the water's acidity, high acidity can expedite the reaction.

### X. Existing relevant products

The leading existing product in this area is a negative hydrogen ion water (also being called as water for keeping youth) developed by Dr. Patrick Flanagan from the United States,, followed by the hydrogen-rich water developed by Dr. Hayashi Hidemitsu ( 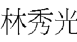 ) from Japan.

### SUMMARY OF THE INVENTION

By synthesizing the aforementioned background technology, human gene is deeply discussed and peroxidation to harm gene is studied with comprehensive chemistry (that is to say, synthesizing the mechanisms of organic chemistry, inorganic chemistry, biological chemistry, nuclear physical chemistry and the like) in the present invention, and it is found that the peroxide indeed would significantly harm human bodies, but a study result according to the principle of comprehensive chemistry finds that it is no doubt for negative hydrogen ion and hydrogen to have a positive effect, but active hydrogen ions (including H⁻, H^{Δ}, H°) is real substances used to specifically control peroxidation, thereby finally obtaining breakthrough. Details are discussed below.

New scientific controllable direction is defined (namely, explaining both of theoretical inventions); 1. A new fundamental particle S, namely life particle (being a fundamental particle of life); 2. comprehensive chemistry (being a set of new theory for discussing life gene).

### 1. A new fundamental particle S, namely life particle (being a fundamental particle of life)

Particle S is formed by radiating atomic nucleus (especially H nucleon) with photon and accumulating, provides energy to prompt proton, and then prompt atom reaction, followed by reducing back to the photon, thus, it is a fundamental particle of life capable to produce and disappear.

It is easiest for photon to enter into H nucleon (which only has one layer electron cloud and one electron). Thus, it is easiest to form particle S in H nucleus.

It is also easy for photon to enter into C, O and N nucleons (all of which only have two-layer electron clouds and a little electron). Therefore, it is easy to prompt nucleus, and particle S also can be formed to further prompt nucleus.

The origin of biology in nature has the following sequence: pure H₂O and CO₂, radiating H nucleon with photon to form life particle, prompting H proton, prompting H electron, cracking H₂O with micro-electricity, combining with CO₂ to form primary organic carbohydrates in nature, gradually forming plant, and then forming animal and human being.

This is the origin of living creatures in nature; the photonuclear radiation is the primary source of physical chemistry for living creatures in nature, and particle S is a fundamental particle specifically formed.

Essential of gene of human being is metabolism. Organics in human bodies lose life particles and flexibility as time goes by. However, like-kind organics in living space retain abundant life particles due to photonuclear radiation, therefore, human body can replace life particles and regulate their flexibility by consuming the like-kind organics.

This is the critical factor that C, H and O and N can form organism from organic chemistry's point of view, wherein Particle S is a fundamental particle of life.

Specifically, photon (of which mass is zero) itself is electrically neutral, but it can absorb micro-charge. Thus, photon enters into atomic nucleus and accumulate to form life particle which accumulates micro-charge to facilitate prompting nucleus. However, it needs to be further discussed and verified afterwards on to what extent the micro-energy that Particle S can accumulate.

### 2. Comprehensive chemistry (being a set of new theory for discussing life gene)

It is presented in the theory that the fundamental mechanism of life gene can be explored by synthesizing the mechanisms of organic chemistry, inorganic chemistry, biological chemistry, nuclear physical chemistry and the like, and finally synthesizing fundamental particles of life gene substance molecules (which is atomic nucleus, proton, electron, neutron, life particle, photon), thereby achieving scientific and controllable useful effects.
(1) Mechanism of comprehensive chemistry (for discussing how the human body forms gene) is as follows in order:
   photonuclear reaction, life particle function, atom Edward effect, atom binding, organic chemistry reaction and forming molecule gene.
(2) A vital principle for human body to remain healthy is to retain comprehensive chemistry physical balance in water, electricity and gas.
(3) Innovative direction of human drugs primarily is no any side effect or reducing side effect and secondly is aim to improve their positive effect.
(4) The human being should deeply realize the serious harmfulness of environmental pollution caused by a lot of energy consumption increased day by day at present, and should strengthen unity, bring the attention gradually together and strengthen precaution gradually together. A real method for saving the human being is that prevention is better than treatment of diseases.

On the basis of the aforementioned discussion and comprehensive chemistry theory, the present invention obtains a controllable research direction.

### Main influence atoms:

| | | | | | | | |
|---|---|---|---|---|---|---|---|
| Electron cloud*1 | 1 | | | | | | |
| | H | | | | | | |
| | 1.0 | | | | | | |
| | (neutron 0∼1) | | | | | | |
| Electron cloud*2 | 6 | 7 | 8 | | | | |
| | C | N | O | | | | |
| | 12.0 | 14.0 | 16.0 | | | | |
| | (neutron≈ 6) | (neutron≈ 7) | (neutron≈ 8) | | | | |
| Electron cloud*3 | 11 | 12 | 13 | 14 | 15 | 16 | 17 |
| | Na | Mg | Al | Si | P | S | Cl |
| | 23.0 | 24.3 | 27.0 | 28.0 | 31.0 | 32.0 | 35.5 |
| | (neutron≥ 12) | (neutron≥ 12) | (neutron≥ 14) | (neutron≈ 14) | (neutron≈16 ) | (neutron≈16) | (neutron ≈18) |
| Electron cloud*4 | 19 | 20 | 24 | 26 | 28 | 30 | 33 |
| | K | Ca | Cr | Fe | Ni | Zn | As |
| | 39.0 | 40.0 | 52.0 | 55.8 | 58.7 | 65.4 | 75.0 |
| | (neutron≥ 20) | (neutron≥ 20) | (neutron≥ 28) | (neutron≥ 30) | (neutron≥31 ) | (neutron≥35) | (neutron ≥42) |
| Electron cloud*5 | 48 | | | | | | |
| | Cd | | | | | | |
| | 112.4 (neutron≥ 64) | | | | | | |
| Electron cloud*6 | 80 | 82 | | | | | |
| | Hg | Pb | | | | | |
| | 200.5 | 207.2 | | | | | |
| | (neutron≥ 120) | (neutron≥ 125) | | | | | |
| Electron cloud*7 | 92 | | | | | | |
| | U | | | | | | |
| | 238.0 | | | | | | |
| | (neutron≥ 146) | | | | | | |

I. Metabolism of main active genes of the human body
   Based on the judgment to gene activity of proteins, carbohydrate, vitamin, biocatalyst enzyme and the like that are necessary for the human body, H-containing components such as -COOH(carboxyl), -OH(oxhydryl), -SH(sulfhydryl) and the like, must be brought to attention. Hydrogen elements in such active group easily lose life particle and gradually turn into free hydrogen when the active group long exist in the human body.

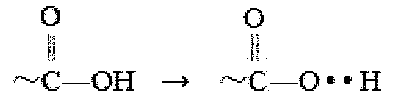

   ∼OH → ∼O••H

   ∼SH → ∼S••H

   Thus, the human body naturally need to breath in fresh hydrogen atom H° (H in vitro contains life particle) in the fresh air or eat fresh food every day to carry out metabolism.

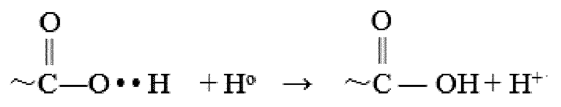

   ∼O••H +H° → ∼OH +H⁺

   ∼S••H + H° → ∼SH +H⁺

   The hydrogen atom H° can recover metabolism of active genes, and the cracking product H⁺ thereof also can volatilize and eliminate toxin.

   H⁺ + H⁻ → H₂↑

   (There is hydrogen gas to eliminate toxin for the human body itself every day)

   H⁺ + OH⁻→ H₂O

   (Effectively absorbing active oxhydryl to eliminate toxin)
   These have fully shown that H° is necessary for the health of the human body.
II. Peroxidation toxicity
   It is known that hydrogen element of the aforementioned active group gradually comes off as time goes by and then easily reacts with active oxygen.

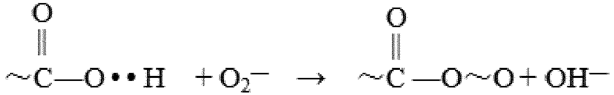

   ∼O••H +O₂⁻ → ∼O∼O + OH⁻

   ∼S••H +O₂⁻ → ∼S∼O+OH⁻

   The product of the reaction is a biological type of peroxides which destroys originally naturally required life gene, and the reaction also generates a lot of active hydroxyl. Damage carried thereby is unquestionable.
III. Active hydrogens reduce peroxides to eliminate toxin (H⁻, H^{Δ}, H°).

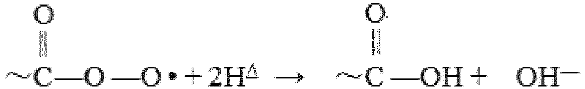

   ∼O-O• +2H^{Δ} → ∼OH + OH⁻

   ∼S-O• +2H^{Δ} → ∼SH + OH⁻

   H° + OH⁻ → H₂O

   2H⁻ +2OH⁻ → O₂↑ + 2H₂↑
IV. Active hydrogens are directly involved in reduction reaction to eliminate toxin.

   H₂O₂ + H^{Δ} + H° → 2 H₂O

   O-O⁻ + 2H⁻ → O₂↑ + H₂↑
V. None other than full research on mechanism, it is realized that active hydrogens have the effect of eliminating toxin, thus, the following chemical reactions are worked out and such products are developed in the present invention.
   1. Generating free hydrogen:

      Mg + HOH → Mg +• OH + H^{Δ}

      Mg + 2HOH → Mg (OH)₂ + 2H^{Δ}
   2. Generating hydrogen:

      2H^{Δ}→H₂

### 3. Generating active hydrogens (H⁻, H^{Δ} and H° are formed mainly by combining free hydrogen with natural mineral aluminosilicate):

Montmorillonite (belonging to aluminosilicate) have the following molecular formula: (Al•Mg)₂ (Si₄O₁₀) (OH)₂•nH₂O

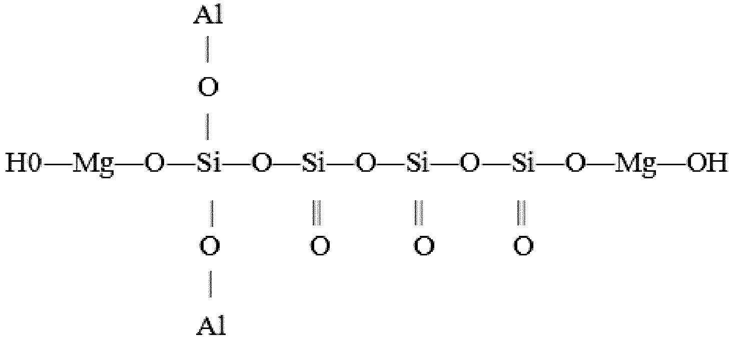

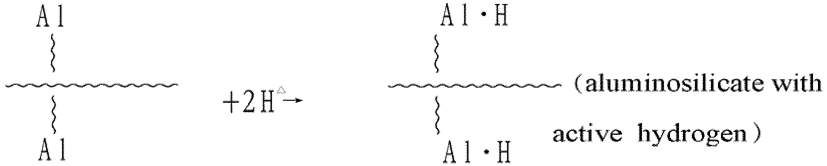

After ingesting the aluminosilicate with active hydrogens into the human body, the aluminosilicate itself is not easily cracked, can be excreted after killing bacteria and absorbing toxin, and can be cracked and release three kinds of active hydrogens.

∼Al•H → ∼Al + H⁻ (negative univalent hydrogen ion)

∼Al•H → ∼Al + H^{Δ} (micro-charge hydrogen ion)

∼Al•H → ∼Al + H° (life particle type of hydrogen ion)

Currently known hydrogen is a main element formed in the human body, and how the hydrogen element keeps the human body healthy is intensely studied increasingly.

Both mineral water made in Lourdes, French, and mineral water made in Nordenau, Germany, are referred as holy water due to their special effects, and it has been known at present that the holy element is hydrogen element.

Dr. Patrick Flanagan in the United States spent fifty years to develop water with negative hydrogen ion referred as "water for keeping youth".

Dr. Hayashi Hidemitsu ( 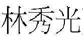 ) in Japan also developed hydrogen-rich water at the beginning of this century.

Water containing hydrogen is studied to treat human being illness in many places around the world.

It is undeniable that the aforementioned precedents make a contribution to the health of the human being, and especially, the subject first issued by Dr. Flanagan is extremely important. According to information, none can excel him in the world until now.

Combining decades of chemical experience with natural mineral research, we have obtained a new controllable scientific thinking up to the present. The achievement is the mineralized ceramic composite material of the present invention for producing the healthy water with active hydrogens, which is not only the best material for producing hydrogen water, but also can release trace elements required by the human body. The mineralized ceramic composite material has various health effects.

Details of the technical solution of the present invention are as follows:
A mineralized ceramic composite material capable of producing healthy water with active hydrogens, formed by mixing a mineralized ceramic A, a mineralized ceramic B with a mineralized ceramic C; wherein:
   The aforementioned mineralized ceramic A is formed by sintering 20 to 40% by weight of dravite and 60 to 80% by weight of montmorillonite at the temperature of 500 to 850°C;
   The aforementioned mineralized ceramic B is formed by sintering 40 to 50% by weight of muyu stone, 10 to 20% by weight of medical stone and 30 to 50% by weight of montmorillonite at the temperature of 500 to 850°C; and
   The aforementioned mineralized ceramic C is made from 100% by weight of magnesium particles with electrolytic process.

The aforementioned mineralized ceramic composite material capable of producing healthy water with active hydrogens, wherein the mixing proportion of the mineralized ceramic A, the mineralized ceramic B and the mineralized ceramic C are as follows:
40 to 55% by weight of the mineralized ceramic A,
10 to 20% by weight of the mineralized ceramic B, and
25 to 50% by weight of the mineralized ceramic C.

The following contents should be particularly explained.

To be healthy, it is necessary for human body to preserve chemical physical balance of natural genes of the human body, wherein oxidation metabolism is a basic mechanism. Without doubt, oxidation is necessary for human, but it has been known that excessive oxidation harms the human body, and it has gradually been proved that a lot of diseases are caused by excessive oxidation. The recent research results aforementioned indicates that excessive oxidation is able to be controlled using hydrogen element.

The theory about negative hydrogen ion presented by Dr. Flanagan is reasonable. Negative hydrogen ion firstly can control excessive oxidation of the human body from the point of chemical balance, and its effect of protecting the human body from the physical perspective can also be studied, for example, negative hydrogen ion can activate blood vessel, cell, archaeus channel and the like of the human body;

Hydrogen-rich water presented by Dr. Hayashi Hidemitsu has effect, but nothing like negative hydrogen ion presented by Dr. Patrick Flanagan. hydrogen-rich water in practice is water with hydrogen gas, physical effect of which is significant in physiological function. However, since a little hydrogen in hydrogen water is released, the effect of controlling excessive oxidation by chemical action thereof is weak.

The healthy water with active hydrogens produced using the mineralized ceramic composite material of the present invention mainly comprises three kinds of active hydrogens and secondly comprises hydrogen gas (also called as hydrogen).

H⁻ (negative monovalent hydrogen ion) equates hydrogen described by Dr. Patrick Flanagan;

H^{Δ} (micro-charge hydrogen ion) is a free hydrogen with specific reduction function;

H° (life particle type of hydrogen ion) is a free hydrogen with reduction performed in the form of substitution.

It has been defined that the peroxide free radicals generated by excessive oxidation in the human body is complex and diverse, and especially, peroxidation of bacteria harms the human body at a faster speed and in an unusual form, therefore, it can be defined from the point of principle of biochemistry that direct controlling toxin using a variety of active hydrogens is more effective than that using single active hydrogen. Undoubtedly, the physical Biochemistry effect thereof is also more widely.

The healthy water with active hydrogens produced by the mineralized ceramic composite material of the present invention is different from the direct potable hydrogen water made in US, Japan and the like; the drinkable water of the present invention is obtained by soaking a bag with the mineralized ceramic composite material (6g per bag) in water with 40∼60°C for 15∼ 20min. It is considered a common natural healthy product producing hydrogen naturally and timely and entering into the human body timely, of which the effect can last up to a week. The effect thereof can generally be perceived by people, in addition, the most importantly is that the product is water that can generate active hydrogens and hydrogen gas in time. Thus, the product has a remarkable healthy effect and basically no side effect.

Thus, the product of the present invention could be seen a scientific controllable innovative direction of such products.

The present invention has the following advantages: when the mineralized ceramic composite material of the present invention is soaked in potable water after being bagged, it can release a variety of active hydrogens and hydrogen gas capable to stably dissolving in water, which can effectively keep human body healthy and prevent relevant factor causing diseases of the human body. Such active hydrogens have an important role for the health of the human being, details are as follows:
(I) A scientific and controllable material to produce water with active hydrogens
   Producing active hydrogens from the material is highly efficient; the material can also stably control pH of water and release trace elements beneficial to the human body.
(II) Active hydrogens generated by the material have various effects comprising protection of the human body, and disease prevention and treatment.
   (1) Active hydrogens can effectively improve metabolism of the human body, which is necessary for everyone in daily life;
   (2) Active hydrogens can effectively reduce a variety of excessive peroxide and peroxidation in the human body, thereby controlling and avoiding various diseases from occurring and being capable to treat various diseases (including some cancers) by reduction;
   (3) Active hydrogens and hydrogen gas can be transported into each cell of the human body through water, thereby being capable to effectively improve the health condition, such as activating blood, vessel and archaeus of the human body, anti-aging and the like.

Many people in many places has drunk the hydrogen water produced by the material of the present invention for many years, the aforementioned effects on the health of the human being has been seen from these people.

### DETAILED DESCRIPTION OF THE INVENTION

Tests show that the mineralized ceramic composite material of the present invention can not only generate abundant active hydrogens, but also can release trace elements required by the human body, resulting in that the mineralized ceramic composite material has various health effects.

In combination with embodiments, the present invention will be described in detail below.

To reach the best effect out of the present invention, the components and the proportion of each components of the mineralized ceramic composite material of the present invention were determined by researching ingredients and features of the natural ores, exactly calculating proportion of the natural ores, accurately controlling sintering temperature and balancing safety and benefit. Details are as follows:
The mineralized ceramic A is formed by sintering 20 to 40% by weight of dravite and 60 to 80% by weight of montmorillonite at the temperature of 500 to 850°C.

The mineralized ceramic B is formed by sintering 40 to 50% by weight of muyu stone, 10 to 20% by weight of medical stone and 30 to 50% by weight of montmorillonite at the temperature of 500 to 850°C.

The mineralized ceramic C is made from 100% by weight of magnesium particle with electrolytic process.

The mineralized ceramic composite material consists of 40 to 55% by weight of the mineralized ceramic A, 10 to 20% by weight of the mineralized ceramic B and 25 to 50% by weight of the mineralized ceramic C.

In the present embodiment, our selection is as follows.

The mineralized ceramic A is formed by sintering 40% by weight of dravite and 60% by weight of montmorillonite at 700°C.

The mineralized ceramic B is formed by sintering 40% by weight of muyu stone, 20% by weight of medical stone and 40% by weight of montmorillonite at 700°C.

The mineralized ceramic C is made from 100% by weight of magnesium particle with electrolytic process.

The mineralized ceramic composite material consists of 45% by weight of the mineralized ceramic A, 15% by weight of the mineralized ceramic B and 40% by weight of the mineralized ceramic C.

### Note:

(1) Tests show that property of each mineralized ceramic is hardly influenced obviously when each mineralized ceramic is sintered at the temperature of 500 to 850°C;
(2) In the proportion of mineralization ceramics, property of each mineralized ceramic is hardly influenced obviously when each component is mixed within the aforementioned given range.

Dravite can generate weak current, negative ion and small water molecule group, which can activate blood and regulate channels.

Montmorillonite can adsorb bacteria, virus and some toxic substances and then be eliminated from the human body. Especial function is that aluminosilicate thereof as a main ingredient can adsorb active hydrogens to enter the active hydrogens into the human body, and then the active hydrogens are cracked and release various active hydrogens.

Muyu stone can release trace elements, such as selenium and the like, and far infrared ray used to warm cells, and muyu stone can effectively regulate pH value of water with active hydrogens.

Medical stone can release mineral salts of various trace elements, by which OH⁻ formed by water with active hydrogens can be effectively controlled, so as to define positive effect of the healthy water of the present invention and basically be no side effect.

Magnesium particles can react with water firstly to generate hydrogen; and secondly magnesium element inevitably takes part in metabolism of the human body.

In the present invention, using reaction of each mineral and water as a research guide, non-toxic and safe mineral elements are selected therefrom. The properties of water change during the physical and chemical changes of water and minerals, wherein the potential value, pH value and the hydrogen content of water and elements released in water is a study question, thereby overcoming the problem of high speed shift of hydrogen in the saturated hydrogen water prepared using conventional electrolysis mode and the problem of positive redox potential of the saturated hydrogen water prepared using conventional electrolysis mode in air, and solving the packaging problem of water containing hydrogen on the market.

Meanwhile, the present invention solves the problem of out-of-control alkalinity of water containing hydrogen produced using conventional magnesium rod, and also solves the problem of hydrogen loss caused by the packaging of water containing hydrogen produced using conventional electrolysis.

Without doubt, it is most meaningful for the present invention to prepare a variety of active hydrogens.

It has been proved through the relevant tests that the mineralized ceramic composite material of the present invention has the following features:
(1) capable to generate abundant active hydrogens.
   The content of hydrogen dissolved in water is 50ppb∼1000ppb (determined according to water temperature and soaking time).
   The study tests show that active hydrogens have the effects of anti-oxidation, resistance to free radicals' damage to the body and improvement of acidic body, thereby preventing a variety of chronic diseases.
(2) capable to release a variety of trace elements.

The mineralized ceramic composite material is capable to release trace elements such as active calcium ion, active magnesium ion, active ferric ion, active zinc ion and the like, and the amount of each trace element released is the amount of metabolism required by the human body every day.

Method for forming hydrogen water is as follows.

The mineralized ceramic composite material of the present invention is bagged (6g per bag) to be placed into an open container and soak it in warm water with 40 to 60°C. The mineralized ceramic composite material can be reused and is soaked in 300ml of water every time.

It is suggested that the hydrogen water is drunk on an empty stomach in the small amount every time and many times every day (e.g. one time every 30 minutes), thereby increasing positive effect.

The healthy water with active hydrogens can be prepared using the mineralized ceramic composite material of the present invention, the resulting healthy water with active hydrogens colligates the advantages and features of water containing hydrogen, small molecule water, ordered water, magnetized water and ionized water with alkalescence, thereby surpassing the drinkable value and the effect of the conventional hydrogen water.

The healthy water with active hydrogenss prepared using the mineralized ceramic composite material of the present invention has the following parameters by detecting:
(1) the hydrogen content of water in the range from 50ppb to 1000ppb (which is abundant);
(2) potential value of water (ORP) in the range from +100mV to -700mV (which is reduced);
(3) pH value in the range from 7.0 to 9.0(which is stable).

The study result obtained by Dr. Erwin Neher and Dr. Bert Sakmann, the Nobel Prize winner in medicine and physiology in 1999, German scientist and cellular physiologist, shows that only small molecular group water can enter into cell nucleus and DNA through ion channels of cell of the human body with a size of 2nm,, thereby activating cell enzyme tissue and stimulating vitality of life, however, other running waters and purified waters cannot enter into cells through the ion channels.

Water with active hydrogens prepared using the mineralized ceramic composite material of the present invention really is small molecular group water. The radius of molecule group of the water with active hydrogens is 68Hz by testing, which is smaller than peak width at half height of water molecular group less than 100Hz in healthy standard of potable water issued by world health organization, the water with active hydrogens has extremely strong penetration capability, diffusion capability, dissolving capacity and metabolic capability, therefore, it is more easily to eliminate oxyradical, harmful acidic metabolites and all kinds of trashes through exchange between water in cells and water out of cell, thereby promoting cell growth and development, maintaining cell viability, the small molecular group water with abundant hydrogen is a water drunk by cells.

After drinking the healthy water with active hydrogens produced using the mineralized ceramic composite material of the present invention daily, the following comprehensive functions can be obtained.
(1) The healthy water with active hydrogens prompts renewal of pepsin, thereby being conducive to digestion, adsorption and excretion of the human body;
(2) the healthy water with active hydrogens adsorbs chlorine gas in vivo, thereby helping the human body eliminate toxin;
(3) the healthy water with active hydrogens prompts metabolism of C and O, thereby activating blood and channels
(4) the healthy water with active hydrogens can generate ordered water to prompt membrane potentials of cytomembrane and cell nucleus to be normal;
(5) the healthy water with active hydrogens can mend and improve pancreatic cell damaged, thereby stimulating insulin secretion;
(6) the healthy water with active hydrogens can soften blood vessel wall, thereby smoothening blood flow and bringing down blood pressure;
(7) the healthy water with active hydrogens can resist free radicals damage, improve acidic body and prevent chronic disease from generating;
(8) the healthy water with active hydrogens supplements various trace elements required by the human body, enhances immunity, slows down ageing, thereby increasing lifetime of the human body;
(9) the healthy water with active hydrogens can kill bacteria and eliminate inflammation and toxin, thereby being capable to use to treat various inflammations caused by bacteria and viruses like cold, pneumonia and enteritis; and
(10) The healthy water with active hydrogens can treat various diseases, for example, Parkinson, lung cancer and intestinal cancer, by gradually reducing the relevant life gene peroxidated.

The aforementioned effects have been certified by many people at many places for many years.

It can be seen from the above, use of the mineralized ceramic composite material of the present invention further benefits the health of the human body.

The healthy water with active hydrogens produced using the mineralized ceramic composite material of the present invention not only can directly be drunk but also be used to make tea, make coffee, mix with milk powder and the like; and the drinking effect is better.

### 1. To directly be drunk

The water quality of the product colligates the advantages and features of water containing hydrogen, small molecule water, ordered water and ionized water with alkalescence, thereby surpassing the drinkable value and the effect of the conventional hydrogen water.

### 2. To be used to make tea

The product can optimize tea color, tea flavor, throat feeling to make tea fragrant and sweet, can suppress release of tannin, can reduce the amount of tea, and also can be used as water for cool-making tea.

### 3. To be used to make coffee

When the product is used to make coffee, coffee has heavy flavor and smooth mouthfeel.

### 4. To be used to mix with milk powder

The product can accelerate dilution of milk powder, supplement calcium required by babies and children to help teeth and bone to grow, intensify Gastrointestinal absorption and enhance immunity.

### 5. To be used to make high-end soup

When the product is added into a stockpot and is boiled together with food material, the flavor and nutrition can totally be dissolved out and soup is sweeter and smoother, and the product can also reused.

### 6. Value for rice

The product is added into rice after washing rice, and then is boiled together with rice, thereby enhancing mouthfeel and nutrition of rice; and the product can also reused.

### 7. To be used to mixing with liquor to dispel the effect of alcohol

The product neutralize acidity of liquor and active oxygen formed when drinking to reduce damage, make mouthfeel of liquor have more level and reduce body discomfortable after drinking.

### 8. To be used at the time of being out

The method for utilizing the product is simple, it is no need to have a specialized container for producing hydrogen water and specialized mixing water, and the product can also pass aviation security inspection and be used at any time of tour and business negotiation.

In addition, by investigation, comparison and calculation, there is a higher price/performance ratio to use the mineralized ceramic composite material of the present invention to produce the healthy water with active hydrogens, which is described in detail in the following table.

| Product Name | Hydrogen Water 7.0 | KIYORABI | H₂-Containing Hydrogen Water | H° HYPER SUISO | Active Hydrogen | SHUBOLAI (product of the present invention) |
|---|---|---|---|---|---|---|
| Origin Place | Japan | Japan | Japan | Japan | Japan | China |
| Parts | 14 parts/ Box | 24 parts / box | 24 parts / box | 7 parts / packAge | 6 parts/ package | 20 parts /box |
| Market price/part | 25.7 Yuan | 35 Yuan | 33 Yuan | - | - | 75 Yuan |
| Dissolving amount of hydrogen (marked) | 7.0ppm | 0.8 to 1.2ppm | 0.8 to 1.2ppm | ≥200pp b | ≥200ppb | 200 to 500ppb |
| Dissolving amount of hydrogen obtained by measurement | 300 to 600 ppb | 200 to 400ppb | 200 to 600ppb | Determined according to water amount for dilution | | 200 to 500ppb |
| Cycle time, total amount | Disposable, 500ml | Disposable, 500ml | Disposable, 300ml | Disposable, Determined according to dilution | | Reusable, 15000ml |
| Temperature of water used | normal temperature | normal temperature | normal temperature | normal temperature | | various temperatures or high temperature |
| Drinkable cup number per part | 1cup | 1cup | 1cup | 1cup | | 50 cup |
| Cost Per cup | 25.7Yuan | 35 Yuan | 33 Yuan | Determined according to dilution | | 1.5 Yuan |

It can be seen from the above, the mineralized ceramic composite material of the present invention is an optimal material for producing water containing hydrogen.

It needs to be noted that the abovementioned embodiments do not limit the present invention in any form and all of the technical solutions obtained with equivalent substitution or change fall into the protective scope of the present invention.

## Claims

1. A mineralized ceramic composite material capable of producing healthy water with active hydrogens, formed by mixing a mineralized ceramic A, a mineralized ceramic B with a mineralized ceramic C; wherein:
the mineralized ceramic A, formed by sintering 20 to 40% by weight of dravite and 60 to 80% by weight of montmorillonite at the temperature of 500 to 850°C ;
the mineralized ceramic B, formed by sintering 40 to 50% by weight of muyu stone, 10 to 20% by weight of medical stone and 30 to 50% by weight of montmorillonite at the temperature of 500 to 850°C; and
the mineralized ceramic C, made from 100% by weight of magnesium particles with electrolytic process.

2. The mineralized ceramic composite material capable of producing healthy water with active hydrogens according to claim 1, wherein the mixing proportion of the mineralized ceramic A, the mineralized ceramic B and the mineralized ceramic C are as follows:
40 to 55% by weight of the mineralized ceramic A,
10 to 20% by weight of the mineralized ceramic B, and
25 to 50% by weight of the mineralized ceramic C.
